# EUROPEAN PATENT APPLICATION

(11) **EP 1 936 148 A1**
(43) Date of publication of application: **25.06.2008**
(21) Application number: 06026777.0
(22) Date of filing: 22.12.2006
(51) Int. Cl.: F02B 75/04, F16C 7/04, F02B 41/04, F02F 7/00

(54) **Engine transmission mechanism**

(71) Applicant: Meyer, Siegfried, 86732 Oettingen (DE)
(72) Inventor: Meyer, Siegfried, 86732 Oettingen (DE)
(74) Representative: Petra, Elke

(57) **Abstract**

An engine transmission mechanism is disclosed to include a connecting bar, which has one end coupled to a piston through a link and the other end coupled to crank elements of a crankshaft for causing the crank elements to provide a torque in clockwise or counter-clockwise direction upon reciprocating motion of the piston, and a coil spring connected between the connecting bar and the link for absorbing shocks. Utilike the conventional design, the direction of the force applied from the piston through the link to the connecting bar is in a horizontal manner so that the applied force from the piston to the link is fully utilized to move the crank elements and the crankshaft, hence improving the horsepower of the engine.

## Description

The present invention relates to transmission mechanisms and more particularly, to an engine transmission mechanism, which has damping means to absorb shocks and, which fully utilizes the power of the engine to provide a torque.

A transmission mechanism is adapted to transfer power from one device to another. For example, the engine transmission mechanism of a motor vehicle is adapted to transfer force from a piston to a crankshaft through a link during reciprocating motion of the piston in a cylinder. The piston of a four-stroke engine completes one cycle of the four strokes of intake, compression, combustion and exhaust when reciprocated twice in the cylinder, i.e., one combustion stroke is achieved only when the crankshaft has been rotated through 720°. Therefore, the effective power resulted from the rotary motion of the crankshaft effects the output of the horsepower of the engine.

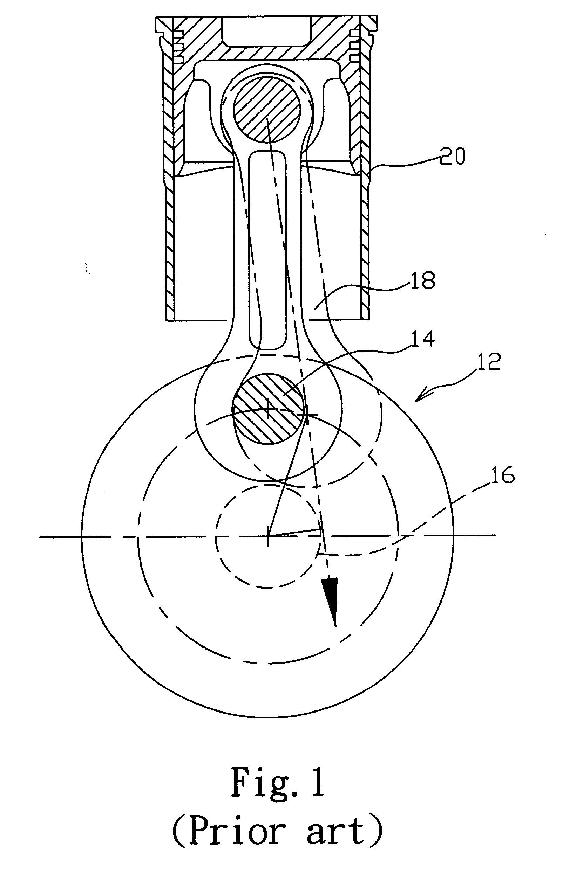

FIG. 1 is a schematic drawing showing a crank used in an engine according to the prior. According to this design, the crankshaft **12** has a crank pin **14** and a shaft **16.** The crank pin **14** is coupled to one end of a link **18.** The other end of the link **18** is coupled to the piston **20** of the engine. During cycling of intake, compression, combustion, and exhaust strokes of the motor vehicle engine to move the piston **20,** the piston **20** imparts a thrust force to the crankshaft **12** via the link **18.** The crankshaft **12** is a solid cylinder. During operation of the piston **20,** the thrust force of the piston **20** is acted upon the line of applied force to produce a moment point to rotate the crankshaft **12.** However, when the thrust force of the piston **20** is acted upon the line of applied force, the thrust force is not concentrated on the same moment point. Actually, both the two sides of the bearing surface of the crankshaft **12** receive the thrust force from the piston **20,** and the side that receives a relatively greater amount of the thrust force from the piston **20** causes the crankshaft **12** to rotate. According to this design, a certain amount of the thrust force from the piston **20** is wasted.

Therefore, it is desirable to provide a crank for engine that eliminates the aforesaid drawback.

The present invention has been accomplished under the circumstances in view. It is one object of the present invention to provide an engine transmission mechanism, which eliminates the drawback of the aforesaid crankshaft transmission design. It is another object of the present invention to provide an engine transmission mechanism, which provides a relatively greater torque when compared to the prior art design, hence improving the horsepower of the engine.

To achieve these and other objects of the present invention, the engine transmission mechanism comprises a link, which has a first end coupled to a piston of an engine and a second end provided with a locating portion and a coupling portion; a connecting bar, which has a first end coupled to crank means and a second end provided with a locating portion and a coupling portion, the locating portion of the connecting bar being spaced between the coupling portion and first end of the connecting bar, the coupling portion of the connecting bar being pivotally coupled to the coupling portion of the link; and spring means, for example, a coil spring connected between the locating portion of the link and the locating portion of the connecting bar.

FIG. 1 is a schematic drawing showing a crankshaft used in an engine according to the prior art.

FIG. 2 is an elevational view of an engine transmission mechanism according to the present invention.

FIG. 3 is an exploded view of the engine transmission mechanism according to the present invention.

FIG. 4 is a schematic drawing showing the engine transmission mechanism coupled to the piston of an engine according to the present invention.

FIGS. 5~12 are schematic drawings of the present invention, showing the action of the engine transmission mechanism during reciprocating motion of the piston.

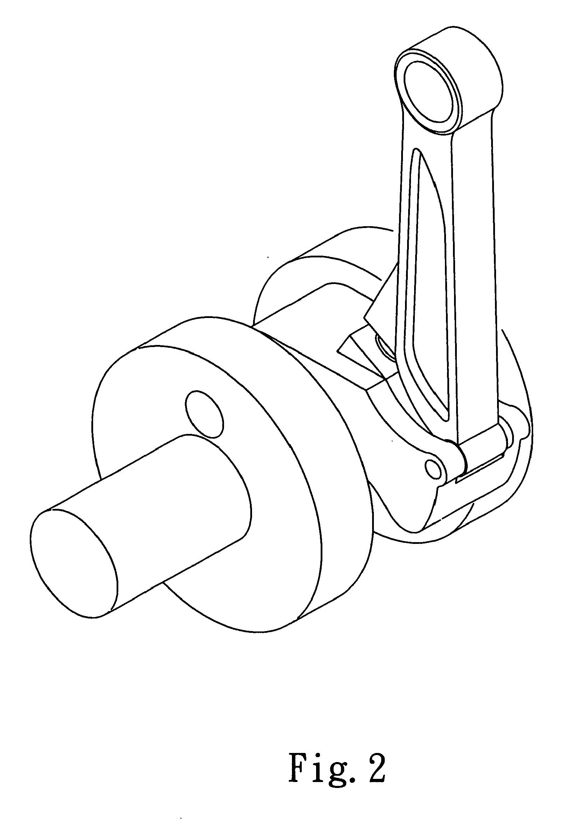

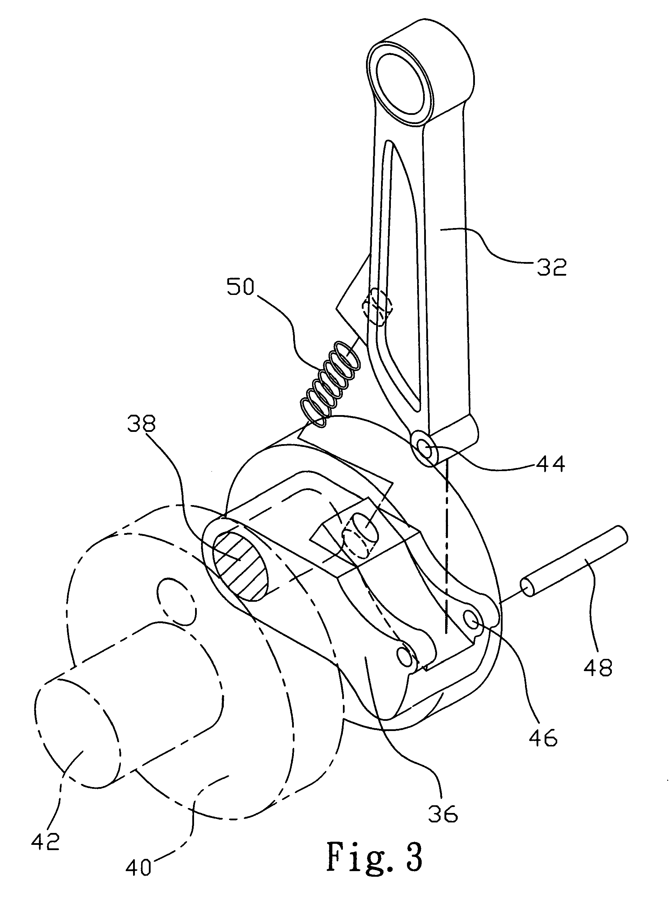

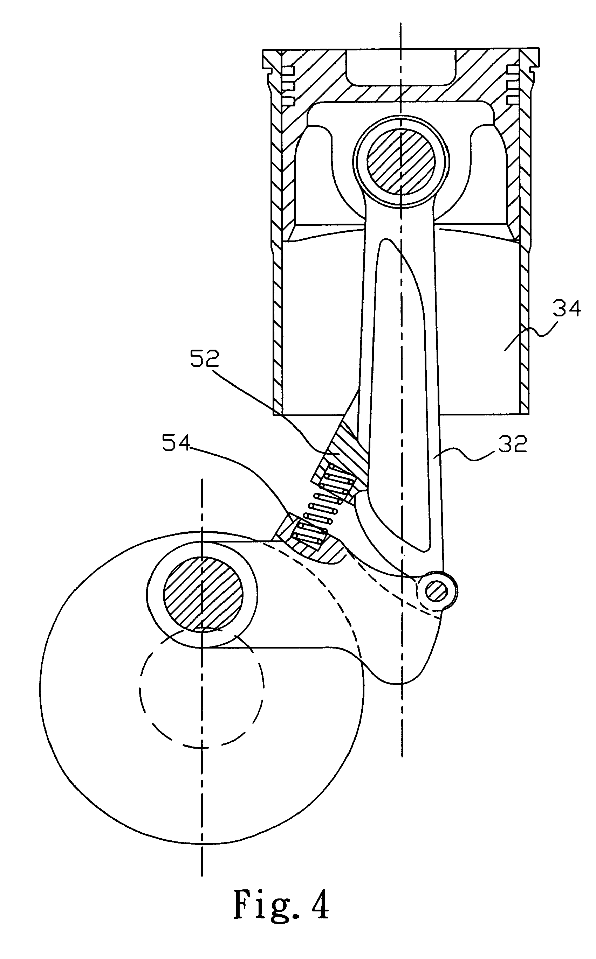

Referring to FIGS. 2~4, an engine transmission mechanism in accordance with the present invention is shown comprising a link **32.** The link **32** has one end pivotally coupled to a piston **34,** and the other end terminating in a locating portion **52** and a coupling means, for example, a pivot hole **44.**

A connecting bar **33** is shown having two connecting rods **38** aligned at its one end and respectively coupled to a respective crank element **40** of a crankshaft **42.** The connecting bar **36** further has two coupling means, for example, pivot holes **46** aligned at its other end, and a baring portion **54** at its top side. The pivot hole **44** of the link **32** is pivotally connected between the pivot holes **46** of the connecting bar **36** with a pin **48.** Therefore, when reciprocating the piston **34,** the link **32** is forced to move the connecting bar **36,** thereby causing the two crank elements **40** to provide a torque in clockwise or counter-clockwise direction. Further, spring means, for example, a coil spring **50** is connected between the locating portion **52** of the link **32** and the locating portion **54** of the connecting bar **36** to absorb shocks during movement of the connecting bar **36** by the link **32.**

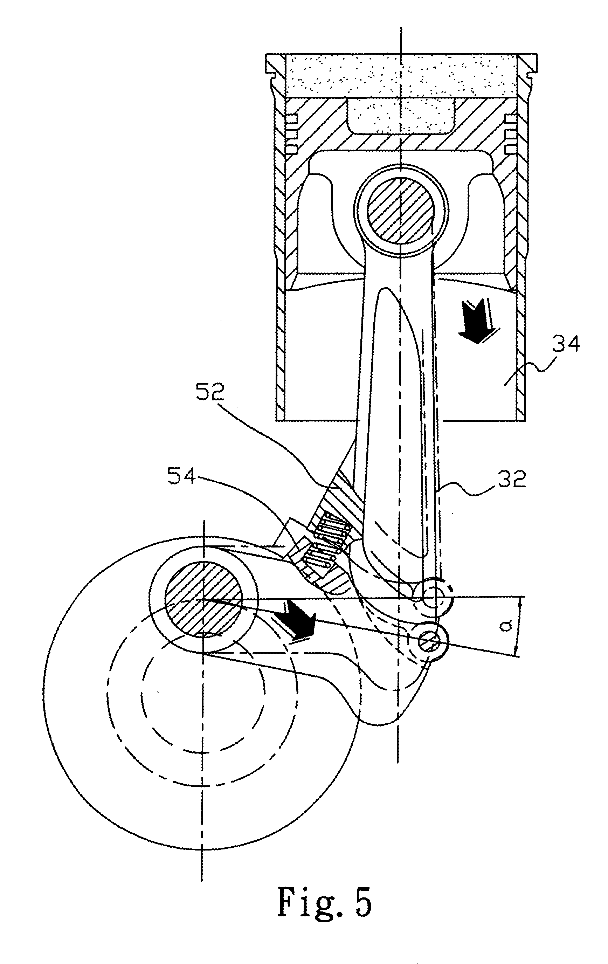

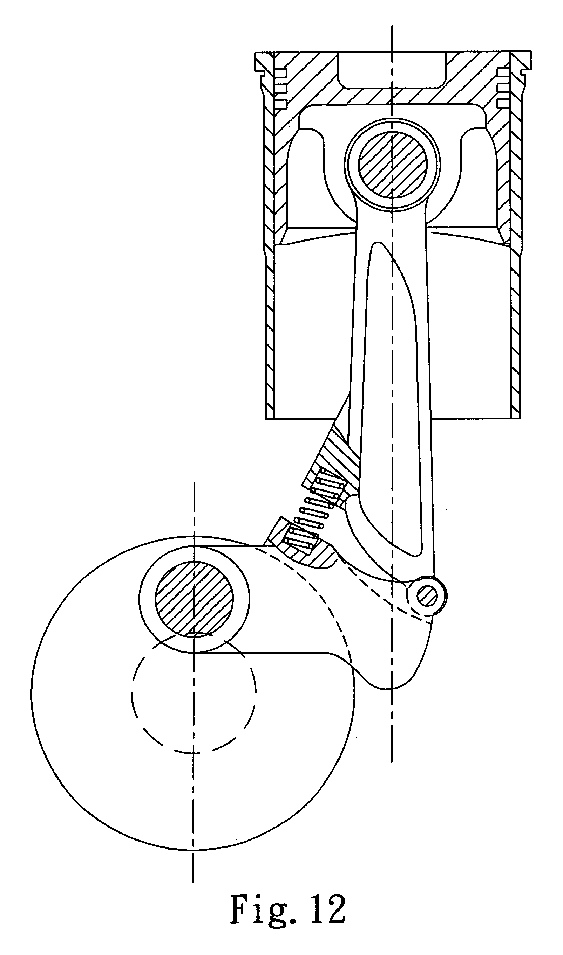

Referring to FIGS. 5~12, during cycling of intake, compression, combustion and exhaust strokes of the motor vehicle engine to move the piston **34,** the piston **34** is forced to move the connecting bar **35** via the link **32.** According to this arrangement, the direction of the force applied from the link **32** to the connecting bar **36** is in a horizontal manner. This is totally different from the prior art design, and therefore the force acted by the piston **34** upon the link **32** is fully utilized.

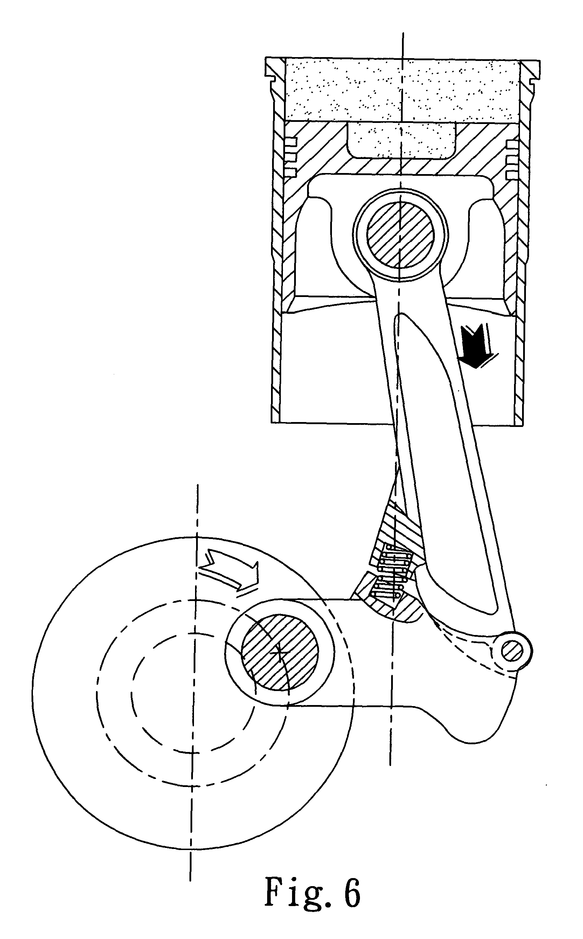

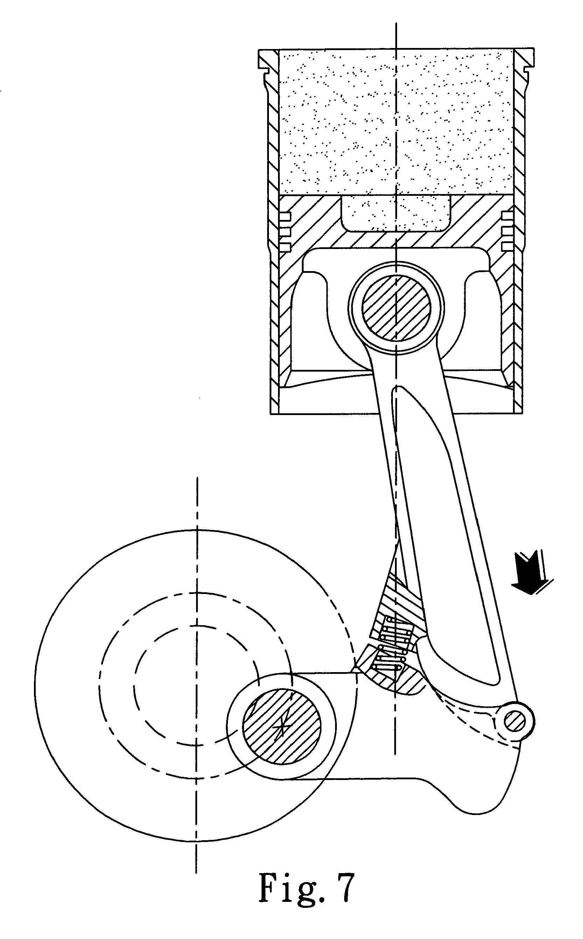

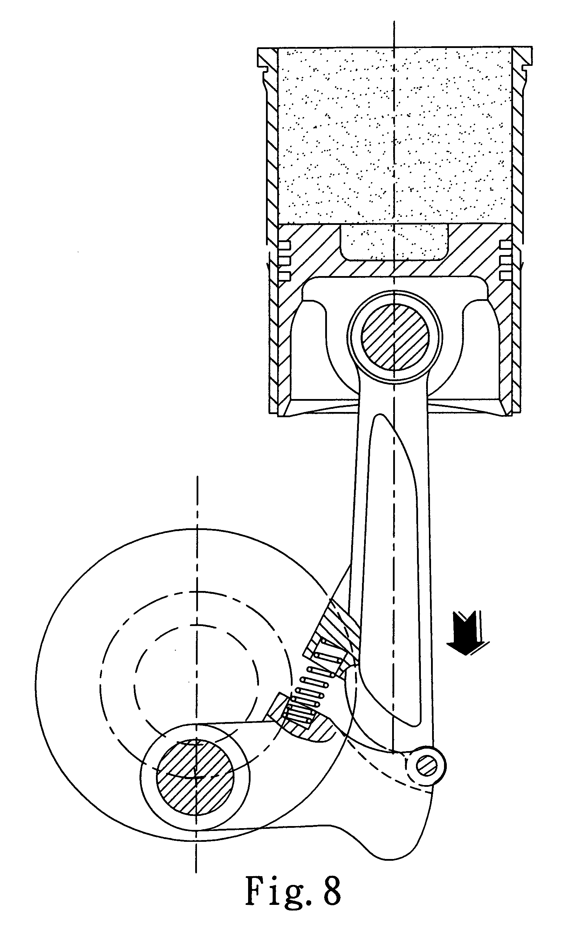

When the piston **34** is started to move the crank elements **40** through the link **32** and the connecting bar **36,** the coil spring **50** absorbs a part of the applied force to the saturated status. At this time, the connecting bar **36** is forced to rotate the crank elements **40,** thereby causing the crank elements **40** to provide a torque, which is then transferred to an external device through the crankshaft **42.** Referring to FIGS. 6 and 7, when the crank elements **40** are rotated, the contained angle between the connecting bar **36** and the link **32** is changed from 90° to an acute angle. When the contained angle between the connecting bar **36** and the link **32** becomes 90° again during rotation of the crank elements **40,** as shown in FIG. 8, the coil spring **50** releases the preserved force, which is transferred through the connecting bar **36** to the crank elements **40,** causing the crank elements **40** to provide a torque.

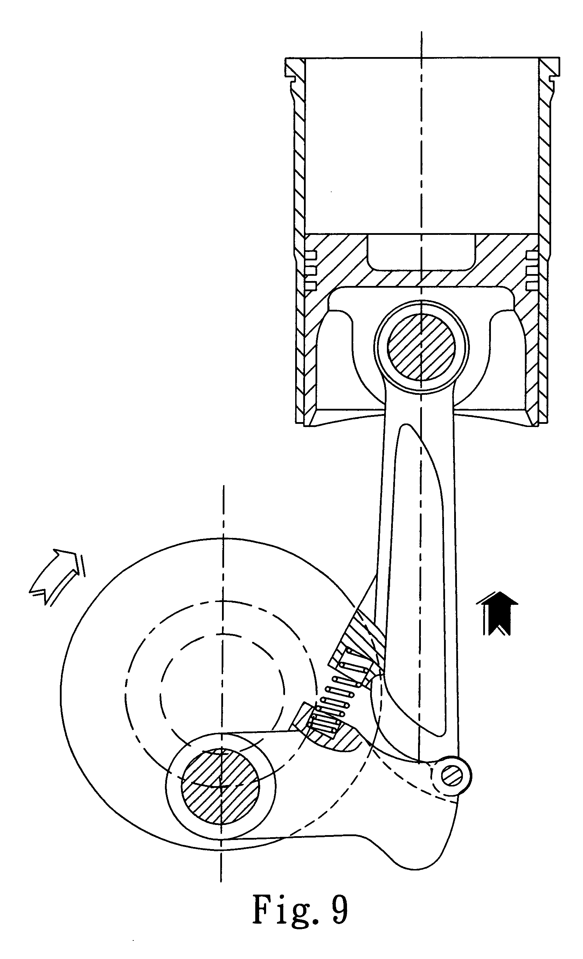

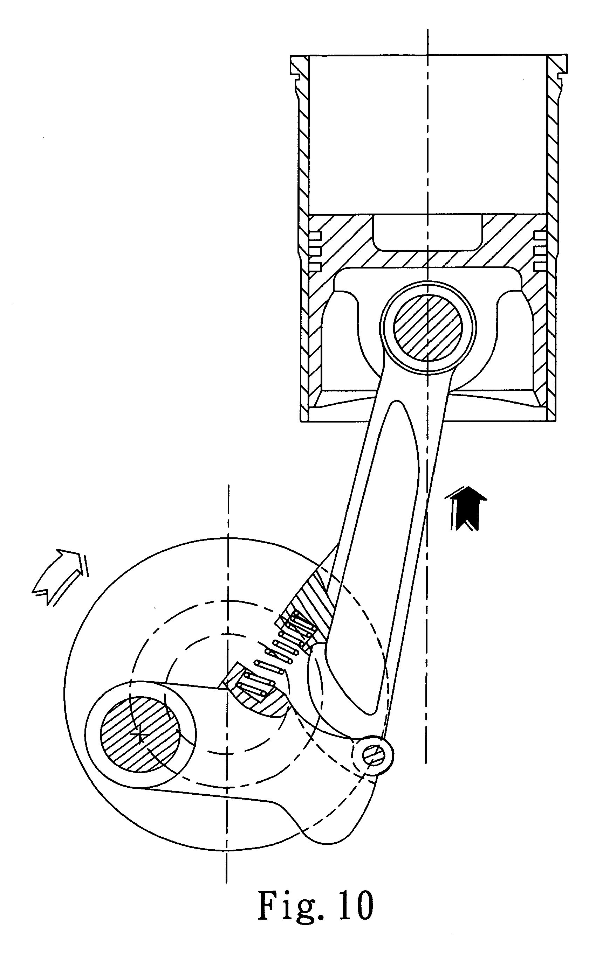

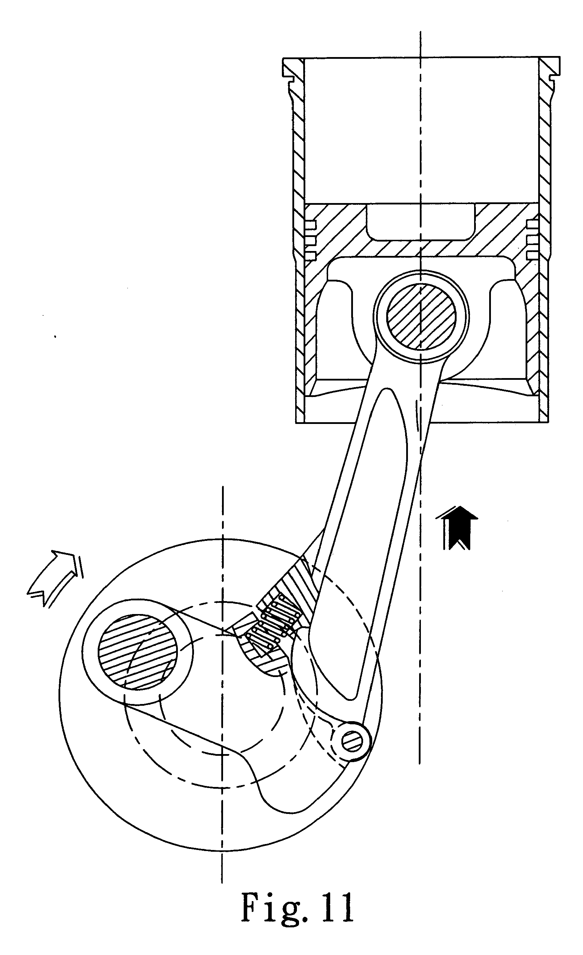

Referring to FIGS. 9~12, when the contained angle between the connecting bar **36** and the link **32** becomes 90° again, the piston **34** carries the link **32** upwards, and the crank elements **40** are continuously rotated. Thereafter, as shown in FIGS. 10 and 11, the contained angle between the connecting bar **36** and the link **32** is gradually reducing from 90° to an acute angle, and the coil spring **50** is forced to absorb a part of the applied force from the link **32.** When the contained angle between the connecting bar **36** and the link **32** becomes 90° once again during rotation of the crank elements **40,** the coil spring **50** releases the preserved force, thereby causing the crank elements **40** to provide a torque again.

As indicated above, when the connecting bar **36** is forced by the link **32** to move the crank elements **40** during reciprocating motion of the piston **34,** the coil spring **50** works to absorb and release force, avoiding waste of applied force from the piston **34,** and therefore the applied force from the piston **34** is fully utilized to rotate the crankshaft **42.**

Although a particular embodiment of the invention has been described in detail for purposes of illustration, various modifications and enhancements may be made without departing from the spirit and scope of the invention.

## Claims

1. An engine transmission mechanism comprising:
a link, said link having a first end coupled to a piston of an engine and a second end provided with a locating portion and a coupling portion;
a connecting bar, said connecting bar having a first end coupled to crank means and a second end provided with a locating portion and a coupling portion, the locating portion of said connecting bar being spaced between the coupling portion and first end of said connecting bar, the coupling portion of said connecting bar being pivotally coupled to the coupling portion of said link; and
spring means connected between the locating portion of said link and the locating portion of said connecting bar.

2. The engine transmission mechanism as claimed in claim 1, wherein the coupling portion of said link is coupled to the coupling portion of said connecting bar by means of a pivot.

3. The engine transmission mechanism as claimed in claim 1, wherein said spring means absorbs shocks during movement of said connecting bar by said link.

4. The engine transmission mechanism as claimed in claim 1, wherein said spring means is a coil spring.

5. The engine transmission mechanism as claimed in claim 1, wherein said crank means is fixedly connected to a crankshaft and adapted to rotate said crankshaft upon movement of said connecting bar by said link.
